(19) Europäisches Patentamt
European Patent Office
Office européen des brevets

(11) **EP 0 833 429 A1**

(12) **EUROPÄISCHE PATENTANMELDUNG**

(43) Veröffentlichungstag:
01.04.1998 Patentblatt 1998/14

(51) Int. Cl.$^6$: **H02K 21/12**, H02K 11/00

(21) Anmeldenummer: 97116207.8

(22) Anmeldetag: 18.09.1997

(84) Benannte Vertragsstaaten:
AT BE CH DE DK ES FI FR GB GR IE IT LI LU MC NL PT SE
Benannte Erstreckungsstaaten:
AL LT LV RO SI

(30) Priorität: 27.09.1996 DE 19639670
27.09.1996 DE 19639671

(71) Anmelder:
Voith Turbo GmbH & Co. KG
89522 Heidenheim (DE)

(72) Erfinder:
• Lange, Andreas
  89551 Zang (DE)
• Hölle, Michael
  89555 Söhnstetten (DE)
• Schiroky, Georg
  89518 Heidenheim (DE)

(74) Vertreter:
Weitzel, Wolfgang, Dr.-Ing.
Friedenstrasse 10
89522 Heidenheim (DE)

(54) **Transversalflussmaschine mit einer Mehrzahl von parallel geschalteten Ringwicklungen sowie Schaltungsanordnung zur Speisung der Transversalflussmaschine**

(57) Die Erfindung betrifft eine Transversalflußmaschine mit

einer Vielzahl von äußeren Statorweicheisenelementen sowie einer Vielzahl von inneren Statorweicheisenelementen;
mindestens einer Wicklung, die innen oder außen oder sowohl innen als auch außen verlaufen kann, wobei
mindestens eine der Wicklungen eine Vielzahl von parallel geschalteten Wicklungssträngen umfaßt.

Die Transversalflußmaschine ist dadurch gekennzeichnet, daß

die parallel geschalteten Stränge mit Zusatzinduktivitäten beschaltet sind oder
die parallel geschalteten Stränge durch einen Differenzflußwandler geführt werden.

FIG.4

EP 0 833 429 A1

## Beschreibung

Die Erfindung betrifft eine Transversalflußmaschine gemäß dem Oberbegriff des Anspruches 1 sowie eine Schaltungsanordnung zur Speisung einer derartigen Transversalflußmaschine gemäß Anspruch 9.

Transversalflußmaschinen (TFM), wie sie beispielsweise aus der DE 35 36 538, deren Offenbarungsgehalt in dieser Anmeldung voll umfänglich mit einbezogen wird, bekannt geworden sind, sind spezielle elektrische Wechselstrommaschinen, die in ihrer Grundform einphasige Energiewandler darstellen. Die Hauptkomponenten einer solchen Transversalflußmaschine sind der stillstehende Ständer und ein darin drehbar angeordneter Läufer. Die für einen gewünschen Betriebspunkt der Transversalflußmaschine notwendige elektrische Energie kann auf verschiedene Art und Weise, beispielsweise einen Wechselrichter, derart aufbereitet werden, daß eine Spannung variabler Amplitude, Frequenz- und Phasenlager an die Maschinenklemmen gelegt wird. Die Transversalflußmaschine erzeugt dann ein Drehmoment, das in erster Näherung sinusförmig zwischen einem Maximalwert um null periodisch mit dem elektrischen Drehwinkel schwingt.

Gemäß der DE 37 05 089, deren Offenbarungsgehalt hiermit voll umfänglich einbezogen wird, können zwei Transversalgrundmaschinen, wie oben beschrieben, mechanisch miteinander gekoppelt und so zu einer zweiphasigen elektrischen Maschine kombiniert werden. Diese Maschinen werden so geregelt, daß im Zusammenwirken beider Maschinenteile ein von der Winkellage des Rotors unabhängiges mechanisches Drehmoment erzeugt wird. Ein derartiger, aus zwei gleichartigen Teilmaschinen (elektrischen Phasen) ausgebauter Motor bildet fuhr eine Vielzahl von Anwendungsfällen ein wirtschaftliches Optimum bezüglich Bauraum, Gewicht und Kosten. So ist beispielsweise die Verwendung einer zweiphasigen Transversalflußmaschine als elektrischer Einzelradantrieb für Citybusse der Zukunft vorgesehen (siehe hierzu auch "Elektrischer Einzelradantrieb für Citybusse der Zukunft" in "Der Nahverkehr" 6-1994, Alba-Fachverlag Düsseldorf. Der zur Energieversorgung einer der beiden Motorphasen notwendige Wechselrichter-Leistungsteil, wie er aus der DE 37 05 089 bekanntgeworden ist, ist derart aufgebaut, daß zwischen den Potentialschienen eines Konstant-Spannungs-Zwischenkreises zwei Wechselrichter-Halbbrücken angeordnet sind und die Motorwicklungen an Wechselspannungsanschlüssen der Halbbrücke angeschlossen sind.

Eine optimale Auslegung des Systems Transversalflußmotor (TFM) - Wechselrichterleistungsteil bzw. Frequenzumrichter (FU) resultiert im allgemeinen in relativ niedrigen Windungszahlen. Dies bedingt einen hohen Ankerstrom, der in der Regel innerhalb der Maschine über einen großen Kupferquerschnitt geführt wird. Bei Betrieb mit Wechselstrom tritt im Leitermaterial abhängig von Betriebsfrequenz, elektrischer Leitfähigkeit, Permeabilität und Geometrie Stromverdrängung auf. Dies aber wiederum bedeutet, daß über den Leiterquerschnitt betrachtet, die Stromdichteverteilung ortsabhängig ist, d.h. bestimmte Bereiche des Leiterquerschnittes werden gegenüber dem Gleichstrombetrieb entlastet, während andere Bereiche stärker belastet werden. Durch die quadratische Abhängigkeit von Stromdichte und Verlusten sowie aufgrund des positiven Widerstandskoeffizienten des Leitermaterials wird eine lokale Stromdichteerhöhung zu einer deutlichen Verlusterhöhung im Leitermaterial. Die nachteiligen Auswirkungen der Stromverdrängung können dadurch minimiert werden, daß der Wicklungsquerschnitt in parallel geschaltete Abschnitte unterteilt wird, und isolierte Teilleiter gegebenenfalls unter Verwendung von Kunststäben, z. B. Roebelstäben, zur Anwendung gelangen.

Durch spezielle Ausführung und Geometrie des Leitermaterials gelingt es, die Auswirkungen der Stromverdrängung im Leiter selbst zu minimieren. Erwähnt seien hier schmale isolierte Flachkupferdrähte sowie isolierte Hochfrequenzlitzen. Aufgrund der unterschiedlichen Flußverkettungen sind jedoch die parallel geschalteten Wicklungsstränge mit unterschiedlich hohen Strömen belastet. Dies führt unerwünschter Weise zu Verlusten. Um diese Verluste zu minimieren, ist im Stand der Technik vorgeschlagen, Maßnahmen an der Wicklung selbst vorzunehmen, beispielsweise eine Verseilung oder eine Leiterführung nach Art des Roebelprinzips, was zu einer gleichmäßigen Streuflußverkettung über die gesamte Maschinenlänge führt. Aufgrund der bei Transversalflußmaschinen spezifischen ringförmigen Wicklung sind derartige Maßnahmen nur schwer realisierbar. Auch könnte man daran denken, eine gleichmäßige Stromaufteilung in den parallelen Wicklungszweigen dadurch zu erreichen, daß jeder Wicklungszweig von einem ihm alleine zugeordneten unabhängigen Teilwechselrichter gespeist wird. Es ist dann möglich, eine gleichmäßige Verteilung der Ströme in diesen Wicklungen zu erreichen, indem die Ventile eines Teilwechselrichters, der auf einen Wicklungszweig wirkt, unterschiedlich lange eingeschaltet bleibt. Allerdings würde dies bedeuten, daß jedem Wicklungsstrang ein eigener Teilwechselrichter zugeordnet werden muß. Damit sind für jeden Wicklungsstrang eigene Zuleitungen vonnöten sowie eigene Umrichter und Maschinenklemmen. Eine derartige Lösung ist aufgrund des großen apparativen Aufwandes nicht wünschenswert.

Als weiteres Problem ergibt sich, bei Transversalflußmaschinen das Problem einer ausreichenden Kühlung, insbesondere wenn eine hohe Wicklungsausnutzung angestrebt wird. So kann aufgrund von geometrischen Gegebenheiten aus bestimmten Bereichen eines Wicklungsstranges anfallende Wärme besser als aus anderen Bereichen abgeführt werden. Hierdurch ergeben sich über den Wicklungsstrang hinweg unerwünschte Temperaturprofile.

Aufgabe der Erfindung ist es, bei möglichst hoher Wicklungsausnutzung eine möglichst gleichmäßige Temperaturverteilung und damit optimale Kühlung einer Transversalflußmaschine zu erreichen. Ein weiterer Aspekt der Erfindung ist darin zu sehen, bei einer Transversalflußmaschine mit einem Wicklungsanschluß und maschinenintern mehreren parallel geschalteten Wicklungssträngen eine ungleichmäßige Stromaufteilung zu vermeiden. Des weiteren soll eine Schaltungsanordnung zur Speisung einer Transversalflußmaschine mit parallel geschalteten Wicklungssträngen angegeben werden, mit der eine symmetrische Temperaturverteilung über den Querschnitt der parallel geschalteten Wicklungssträngen erreicht werden kann.

Erfindungsgemäß wird die Aufgabe der Erfindung dadurch gelöst, daß mindestens eine der Ringwicklungen der Transversalflußmaschine eine Mehrzahl von parallel geschalteten Wicklungssträngen umfaßt und die parallel geschalteten Stränge der mindestens einen Ringwicklung mit Zusatzinduktivitäten beschaltet sind. Bei einer Schaltungsanordnung zur Speisung der Transversalflußmaschine sind zur Lösung dieser Aufgabe Mittel zur Stromaufteilung in den parallel geschalteten Wicklungssträngen vorgesehen.

In einer besonders bevorzugten Ausführungsform ist vorgesehen, daß die Beschaltung mit Zusatzinduktivitäten derart erfolgt, daß in den parallel geschalteten Strängen der Ringwicklungen der Transversalflußmaschine eine derartige Stromverteilung in den einzelnen Strängen vorliegt, daß eine über den Querschnitt der Stränge gleichmäßige Temperaturverteilung erreicht wird. In einer einfachen Ausführungsform kann vorgesehen sein, daß als Zusatzinduktivität ein Magnetkern in den schlechter gekühlten Wicklungsstrang geschaltet wird. Dieser kann vorteilhaft als Ferritkern, als Schnitt- oder Ringbandkern mit Luftspalt ausgebildet werden. Für einen bestimmten Betriebspunkt kann auf diese Art und Weise abhängig von Geometrie, Spaltweite und Wicklungszahl eine optimale Temperaturaufteilung, d.h. eine gleichmäßige über den Querschnitt der parallel geschalteten Strängen eingestellt werden.

In Abhängigkeit von der konstruktiven Ausbildung der Transversalflußmaschine müssen die einzelnen Wicklungsstränge mit unterschiedlich hohen Strömen belastet werden, die mit Hilfe der Zusatzinduktivitäten eingestellt werden.

In einer ersten bevorzugten Ausführungsform weist die Transversalflußmaschine eine Kühleinrichtung für bestimmte Bereiche der Ringwicklung der Transversalflußmaschine auf, beispielsweise einen Ölkühler.

In einer vorteilhaften Ausführungsform ist vorgesehen, die Wicklungsstränge so mit Zusatzinduktivitäten zu beschalten oder durch einen Differenzflußwandler führen, daß Wicklungsstränge, die in der Nähe der Kühleinrichtung verlaufen, einen höheren Stromfluß führen und damit eine höhere Verlustdichte aufweisen als die Wicklungsstränge, die hiervon beabstandet sind.

In einer zweiten bevorzugten Ausführungsform weist die Transversalflußmaschine Statorweicheisenelemente auf, die U-förmig mit einer Aussparung, die einen Nutgrund aufweist, zur Aufnahme der einzelnen Stränge der Ringwicklung ausgebildet sind. Bei einer derartigen Transversalflußmaschine werden, um das Ziel einer über den Wicklungsquerschnitt gleichmäßigen Temperaturverteilung zu erreichen, die Wicklungsstränge, die dem Luftspalt zugewandt sind und damit schlechter als die am Nutgrund verlaufenden Wicklungsstränge gekühlt sind mit einer Zusatzinduktivität beschaltet. Durch die Beschaltung wird der Stromfluß durch diesen Wicklungsstrang vermindert. Bei unverändertem Gesamtstrom erhöht sich dann der Stromfluß durch den anderen, besser gekühlten Wicklungsstrang. Als Folge der Beschaltung ergibt sich eine an die Temperaturabführung angepaßte Stromverteilung in den einzelnen Wicklungssträngen und somit eine über den Querschnitt sämtlicher Wicklungsstränge annähernd gleiche Temperaturverteilung.

Bei einer besonders vorteilhaften Ausführungsform der erfindungsgemäßen Schaltungsanordnung ist vorgesehen, daß eine gleichmäßige Temperaturverteilung über den Querschnitt der parallel geschalteten Wicklungsstränge dadurch erreicht wird, daß die Mittel zur Stromaufteilung Zusatzinduktivitäten umfassen, mit denen die einzelnen Wicklungsstränge zur Kompensation der unterschiedlichen Temperaturverteilung beschaltet werden.

Bei einer vorteilhaften Ausführungsform der Schaltungsanordnung ist vorgesehen, die zusätzlichen Induktivitäten als Ferritkerne, als Schnitt- oder Ringbandkerne mit Luftspalt auszubilden.

Aufgrund der hohen Frequenz, mit der die Transversalflußmaschine betrieben wird, ist es möglich, diese zusätzlichen Induktivitäten in ihren Abmessungen relativ klein zu bemessen. Sie können damit in die Maschine integriert werden, z. B. in den Klemmkasten.

Die Erfindung soll nachfolgend anhand eines Ausführungsbeispieles und den beigefügten Zeichnungen näher erläutert werden.

Es zeigen:

Fig. 1    eine Transversalflußmaschine in einem achssenkrechten Schnitt;

Fig. 2    ein Schnitt durch den Gegenstand von Fig. 1, gelegt in der Schnittebene A-A, wobei die Ringwicklungen nur einen einzigen Strang, wie im Stand der Technik (siehe hierzu bspw. DE 37 05 089 oder DE 35 36 538), aufweisen;

Fig. 3    einen Schnitt in der Schnittebene A-A, wobei die erste und die zweite Ringwicklung jeweils zwei Wicklungsstränge aufweisen, die nebeneinanderliegend angeordnet sind;

Fig. 4    Schnitt A-A durch eine Transversalflußmaschine gemäß Fig. 1, bei der die Ringwicklungen zwei übereinander angeordnete Wicklungsstränge umfaßt;

Fig. 5   den Verlauf zweier Wicklungsstränge der Transversalflußmaschine, wobei der eine mit einer Zusatzinduktivität versehen ist;

Fig. 6   den Verlauf zweier Wicklungsstränge, die mit einem Differenzwandler als Zusatrinduktivität versehen sind;

Fig. 7   achssenkrechter Schnitt durch die Transversalflußmaschine gemäß Fig. 1 mit zwei übereinander angeordneten Wicklungssträngen;

Fig. 8   Symmetrierung einer Transversalflußmaschine mit zwei Wicklungssträngen;

Fig. 8A   Schnitt durch ein Statorweicheisenelement mit zwei Wicklungssträngen;

Fig. 9   Schnitt durch ein Statorweicheisenelement mit vier Wicklungssträngen;

Fig. 10   erste Ausführungsform der Schaltungsanordnung mit den erfindungsgemäßen Zusatzinduktivitäten;

Fig. 11   zweite Ausführungsform der Schaltungsanordnung mit dem Differenzwandler

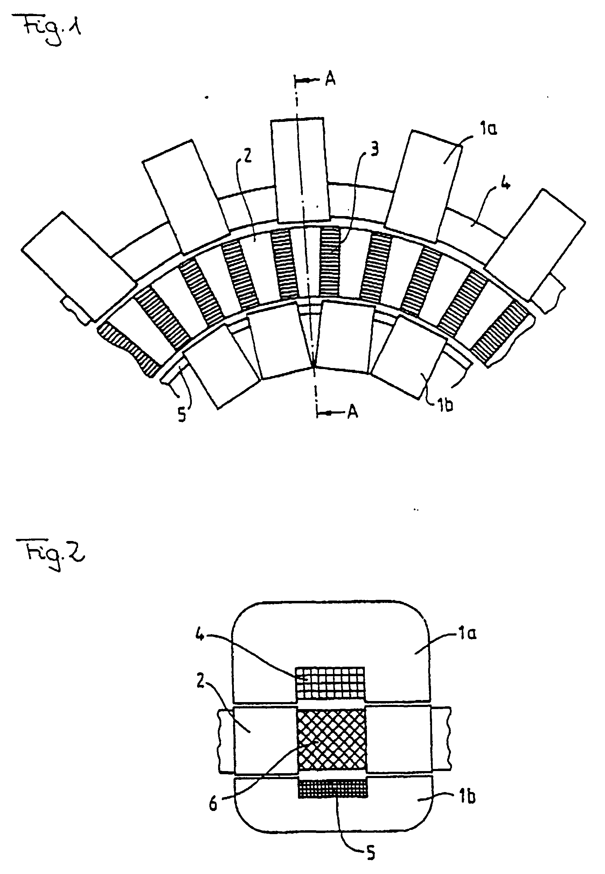

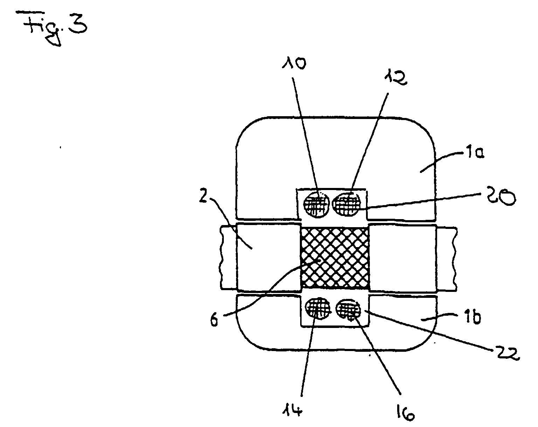

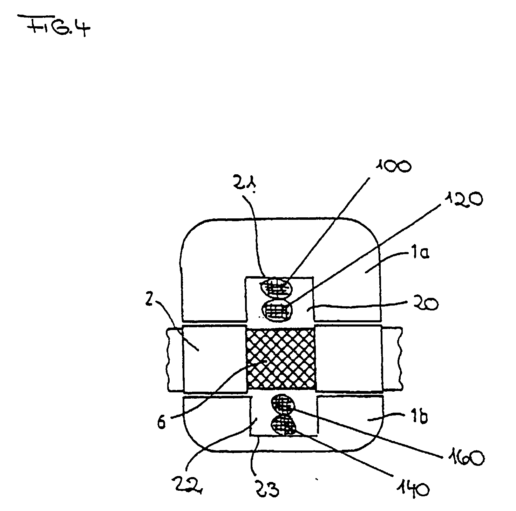

Figur 1 zeigt eine Transversalflußmaschine, wie sie beispielsweise aus der DE 35 36 538 oder der DE 37 05 089, deren Offenbarungsgehalt hiermit voll umfänglich in dieser Anmeldung mit einbezogen wird, in einem achssenkrechten Schnitt.

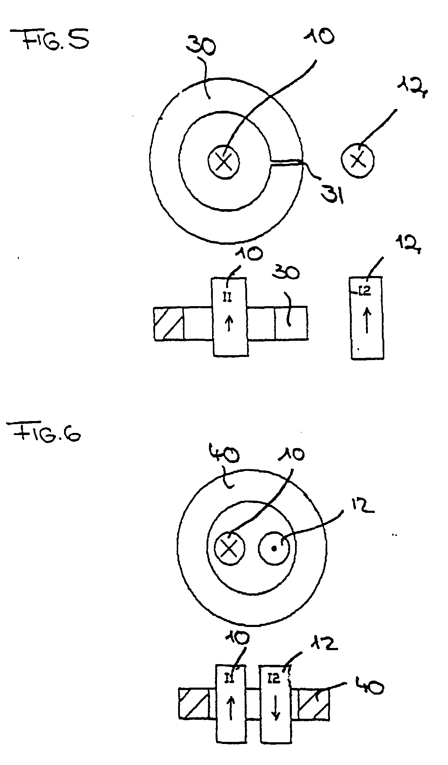

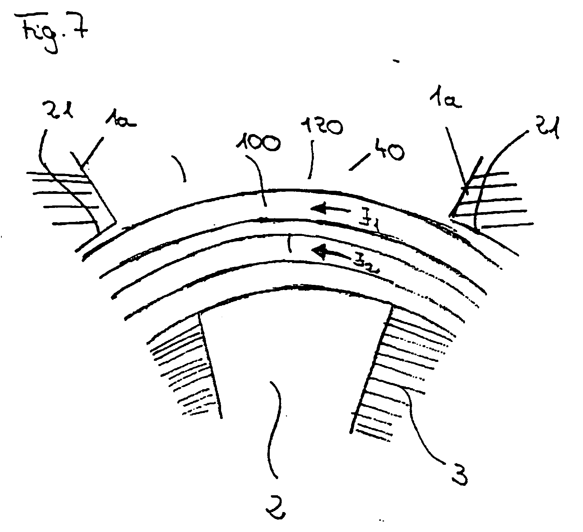

Fig. 2 ist ein Schnitt durch den Gegenstand von Fig. 1, in der Schnittebene A-A. Man erkennt aus diesen Figuren eine Vielzahl von äußeren Statorweicheisenelementen 1a sowie von inneren Statorweicheisenelementen 1b. Den äußeren sowie den inneren Statorelementen ist jeweils eine Ringwicklung 4 bzw. 5 zugeordnet. Wie aus Fig. 2 ersichtlich, setzt sich die Ringwicklung 4 bzw. 5 aus einem einzigen Strang zusammen und liegt in einer Aussparung der hufeisenförmigen Statorweicheisenelemente 1a bzw. 1b. In der Ausführungsform gemäß Fig. 2, die den Stand der Technik in Gestalt der oben erwähnten Druckschriften repräsentiert, füllt die Ringwicklung die Aussparung der hufeisenförmigen Statorweicheisenelemente 1a bzw. 1b vollständig aus. Zwischen den äußeren und den inneren Statorweicheisenelementen befindet sich der drehbar gelagerte, zylindrische Rotor. Dieser ist aus zwei Ringen aufgebaut, die ihrerseits zusammengesetzt sind aus einer Vielzahl von Magneten 3, sowie diesen benachbart Weicheisenelementen 2. Somit befindet sich jeweils ein Magnet 3 zwischen zwei einander benachbarten Weicheisenelementen 2. Die beiden genannten Ringe, die alternierend aus Magneten und Weicheisenelementen zusammengesetzt sind, sind, wie aus Fig. 2 ersichtlich, in axialer Richtung nebeneinander angeordnet. Zwischen ihnen befindet sich ein durchgehender, d.h. sich über den gesamten Umfang erstreckender Kunststoffring 6.

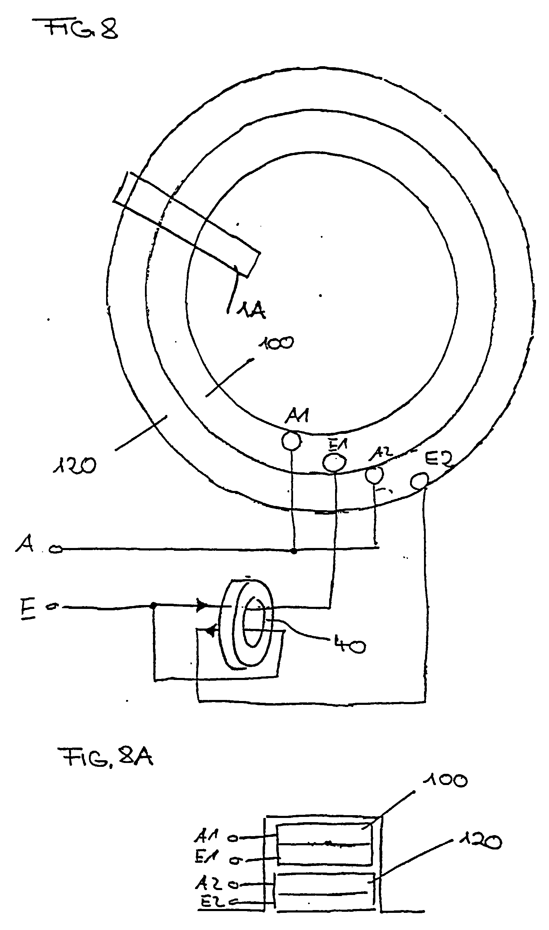

In Fig. 3 ist eine Transversalflußmaschine dargestellt, die, in achssenkrechtem Schnitt gesehen, der von Fig. 1 entspricht.

Entgegen den Ausführungsformen gemäß dem Stand der Technik umfaßt die Ringwicklung des äußeren Statorweicheisenelementes 1a zwei Wicklungsstränge 10, 12. Auch die Ringwicklung des inneren Statorweicheisenelementes 1b umfaßt in der dargestellten Ausführungsform zwei Stränge. Die Stränge, die den äußeren als auch den inneren Statorweicheisenelementen zugeordnet sind, liegen nebeinander angeordnet in einer Aussparung 20 bzw. 22 der Weicheisenelemente. Diese weisen infolge dessen eine Hufeisenform auf.

Die vorliegende Erfindung ist keinesfalls nur auf die zuvor beschriebene beispielhafte, spezielle Transversalflußmaschine beschränkt. Vielmehr sind von der Erfindung auch Ausführungsformen mit nur einseitiger Wicklung umfaßt.

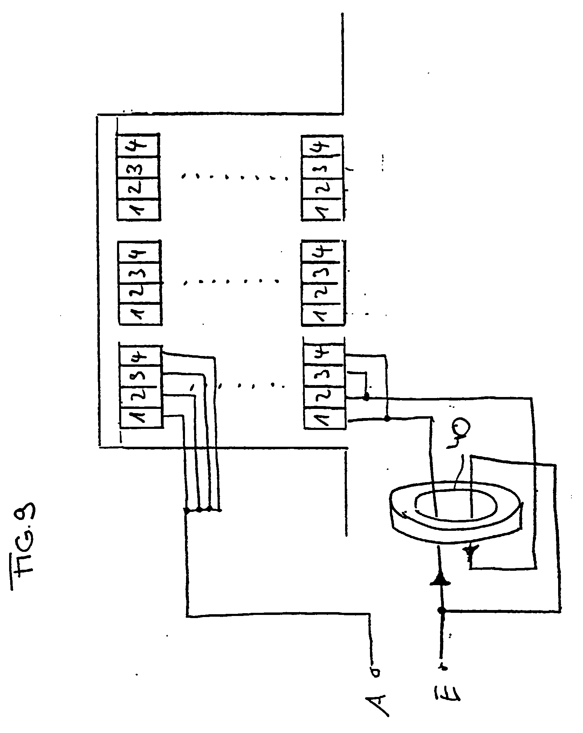

In Fig. 4 ist eine weitere Ausführungsform einer Transversalflußmaschine mit mehr als einem Wicklungsstrang dargestellt. Sowohl die Wicklungsstränge des äußeren Statorweicheisenelementes 100, 120 sind übereinanderliegend angeordnet als auch die Wicklungsstränge der inneren Statorweicheisenelemente 140 bzw. 160.

Hierbei ist der Wicklungsstrang 100, der der Ringwicklung des äußeren Statorweicheisenelementes 1a zugeordnet ist, am Nutgrund 21 der Aussparung 20 angeordnet, und der Wicklungsstrang 140 der Ringwicklung des inneren Statorweicheisenelementes 1b am Nutgrund 23 der Aussparung 22.

Die Figuren 5 und 6 zeigen die Beschaltung einzelner Wicklungsstränge mit Zusatzinduktivitäten zur Erzielung eines symmetrischen Strangflusses. Die Beschaltung gemäß der Ausführungsform nach Fig. 5 soll vorliegend für das Beispiel einer Transversalflußmaschine mit zwei übereinander verlaufenden Wicklungssträngen 10, 12 der Ringwicklung der äußeren Statorweicheisenelemente diskutiert werden, ohne daß dies als Beschränkung des allgemein erfinderischen Konzeptes aufgefaßt werden soll. Die übereinanderliegenden, parallel zueinander verlaufenden Wicklungsstränge 10, 12 gemäß Fig. 5 werden von Strömen E1 und E2 in derselben Richtung durchflossen. Der höher mit einem Strom belastete Wicklungsstrang 10 wird von einem Ringmagneten 30 mit Luftspalt 31 umgeben, der für eine zusätzliche Induktivität in diesem stärker belasteten Wicklungsstrang sorgt. Durch die zusätzliche Induktivität wird erreicht, daß trotz der unterschiedlichen Flußverkettungen in den beiden Wicklungssträngen, die zu unterschiedlichen Belastungen im Wechselstromfall gegenüber dem Gleichstromfall in den beiden Wicklungssträngen führen, eine gleichmäßige, d. h. symmetrische Stromaufteilung innerhalb der Wicklungsstränge erzwungen wird. Anstelle des dargestellten Ringmagneten kann in einer Fortbildung der Erfindung vorgesehen sein, daß die zusätzlich in einen Wicklungsstrang eingebrachten Induktivitäten als Ferritkerne, als Schnitt- oder Ringbandkerne mit Luftspalt ausgeführt sind. Aufgrund der hohen Frequenzen, mit der die Transversalflußmaschine betrieben wird, ist es möglich, diese zusätzlichen Induktivitäten in ihren Abmessungen relativ klein zu bemessen. Damit können diese leicht in die Transversalflußmaschine integriert werden.

In Fig. 6 ist wiederum für den Beispielfall zweier übereinander angeordneter Wicklungsstränge gemäß Fig. 3, ohne daß irgendeine Beschränkung zu sehen ist, die Beschaltung mit einem Differenzwandler 40 gezeigt, der eine gleichmäßige Belastung in den einzelnen Wicklungssträngen sicherstellt. Um eine vom Betriebspunkt unabhängige, gleichmäßige, d. h. symmetrische Stromverteilung zu erreichen, ist es nötig, daß die gegenüber dem Gleichstrombetrieb unter- bzw. überbelasteten Wicklungsstränge in entgegengesetzter Richtung durch den Differenzflußwandler, der als spaltloser Magnetkern ausgeführt ist, zu führen. Solange keine Sättigung eintritt, erzwingt der resultierende Differenzfluß aufgrund der guten Kopplung bei einer derartigen Beschaltung in beiden Strängen eine gleiche Flußverkettung. Hierbei können die Teilstränge auch mehrmals durch den Wandler geführt werden, d. h. $n \geq 1$. Bei einer derartigen Ausführungsform ist darauf zu achten, daß die Teilstränge mit gleicher Windungszahl, d. h. $n_1 = n_2$ durch den Differenzflußwandler bzw. Symmetrierkern geführt werden.

Fig. 7 zeigt einen Ausschnitt des achssenkrechten Schnittes durch die Transversalflußmaschine gemäß Fig.1 mit zwei übereinander angeordneten Wicklungssträngen, wie sie beispielsweise aus Fig. 5 bekanntgeworden sind. Der eine Wicklungsstrang 100 der Ringwicklung verläuft am Nutgrund 21 der äußeren Statorweicheisenelemente 1a. Der andere Wicklungsstrang 120 verläuft nahe dem Luftspalt der Maschine, wie auch aus Fig. 4 ersichtlich ist.

Werden aufgrund spezieller Kühlkonstruktionen der Transversalflußmaschine die Wicklungsbereiche am Nutgrund 21 kühlungstechnisch bevorzugt, so ist bei gleich hoher Strombelastung, wie sie beispielsweise durch die Beschaltung mit einem Differenzflußwandler erzeugt werden kann, die Wärmeabfuhr am Wicklungsstrang 100 besser als am Wicklungsstrang 120, der in der Nähe des Luftspaltes der Transversalflußmaschine liegt. Dies führt dazu, daß über den Querschnitt der aus verschiedenen Strängen bestehenden Wicklung eine ungleichmäßige Temperaturverteilung herrscht. Dies ist, betrachtet man die Abhängigkeit beispielsweise des Leitungswiderstandes von der Temperatur, nachteilig. Strebt man eine gleichmäßige Temperaturverteilung in der aus verschiedenen Strängen bestehenden Ringwicklung an, so ist es vorteilhaft, anstelle einer Symmetrierung des Stromflusses wie in den Fig. 5 und 6 eine Temperatursymmetrierung anzustreben, d. h. die näher an der Wärmesenke angeordneten Wicklungsbereiche führen einen höheren Strom als die luftspaltseitigen. Dies kann man dadurch erreichen, daß der luftspaltseitige Wicklungsstrang 120 mit einer Zusatzinduktivität beschaltet wird. Dadurch wird der Stromfluß durch Wicklungsstrang 120 vermindert und bei gleichbleibendem Gesamtstrom der am Nutgrund liegende Wicklungsstrang 100 mit einem größeren Stromfluß belastet. Aufgrund der besseren Kühlung des Wicklungsstranges 100 wird ein Temperaturunterschied, der sich bei gleicher Belastung, d. h. gleichem Stromfluß in den Wicklungssträngen ergeben würde, ausgeglichen. In einer Abwandlung der Erfindung kann vorgesehen sein, anstelle der zusätzlichen Induktivität einen Differenzflußwandler zu verwenden. Dann müßte sich aber die Windungszahl der beiden Teilwicklungen unterscheiden. In dem Differenzflußwandler wird dann aufgrund der unterschiedlichen Windungszahl ein unsymmetrischer Differenzfluß die Folge sein. Unterhalb des Luftspaltes sind, wie in der Ansicht von Fig. 1, die der Ansicht von Fig. 7 entspricht, die Magneten 3 und die benachbarten Weicheisenelemente 2 des drehbar gelagerten, zylindrischen Rotors dargestellt. Die Zusatzinduktivitäten wie auch der Differenzflußwandler können außerhalb der Maschine angeordnet sein, beispielsweise in der Maschinenzuleitung oder im Frequenzumrichter. Sie sind aber auch aufgrund ihrer geringen Baugröße in die Maschine integrierbar.

Die beschriebene Transversalflußmaschine, bei der die am Nutgrund verlaufenden Wicklungsstränge kühltechnisch bevorzugt sind, ist nur eine beispielhafte Ausführungsvariante der Erfindung. So können bei anderen Kanalanordnungen andere Temperaturverteilungen vorliegen, so daß andere Bereiche kühltechnisch bevorzugt sind.

Beispielsweise ist auch vorstellbar, daß ein gewisser Bereich des Querschnittes der Wicklungsstränge mit einer Kühleinrichtung beispielsweise einem Ölkühler oder einem Ölbad gekühlt werden, andere hingegen nicht.

Gemäß dem allgemeinen Gedanken der Erfindung, der darauf abzielt, eine möglichst gleiche Temperaturverteilung über den Querschnitt hinweg zu erzielen, also eine Temperatursymmetrie ist bei einer derartigen gekühlten Transversalflußmaschine vorgesehen, durch Beschaltung mit Zusatzinduktivitäten eine derartige Stromaufteilung zu erreichen, daß der der Kühleinrichtung benachbarte Wicklungsstrang einen höheren Stromfluß aufweist als der schlechter gekühlte. Durch eine gleichmäßige Temperaturverteilung über den Wicklungsquerschnitt der Erfindung wird eine höhere Maschinenausnutzung ermöglicht, ohne daß die Temperaturgrenzwerte von Isoliermaterialien der Maschine überschritten werden.

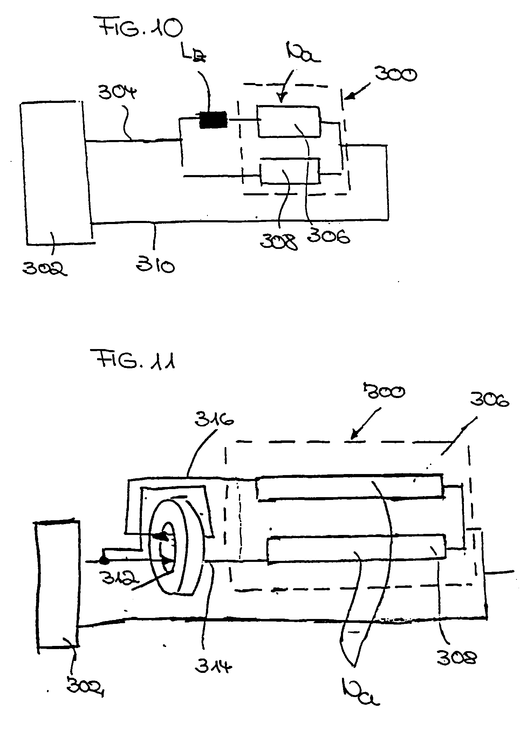

In Fig. 8 ist die Beschaltung einer Transversalflußmaschine (TFM) mit zwei Wicklungssträngen 100, 120 mit einem Differenzflußwandler 40, der außerhalb der Maschine angeordnet ist, dargestellt. Die beiden Stränge sind von Statorweicheisenelementen (1a), wovon einer in Fig. 8 beispielhaft für die Vielzahl von Statorweicheisenelemente der TFM dargestellt ist, umgeben. Gemäß dem Schnitt, der in Fig. 8A dargestellt ist, ist Wicklungsstrang 100 näher am Nutgrund angeordnet als Wicklungsstrang 120.

Die Beschaltung der Wicklungsstränge 100,120 erfolgt in einer Zuleitungsseite der zweiphasigen Maschine, vorliegend in der Zuleitung E. Zuleitung E1 weist im Differenzflußwandler einen Stromfluß auf, der dem Stromfluß in Leitung E2 entgegengerichtet ist.

Selbstverständlich ist es möglich, die Ringwicklungen einer Transversalflußmaschine in mehr als zwei Wicklungsstränge aufzuteilen, und entsprechend zu beschalten, so daß in allen Wicklungssträngen entweder eine gleichmäßige Stromverteilung vorliegt oder die gewünschte Stromverteilung, die zu einer gleichmäßigen Temperaturverteilung über den Querschnitt führt.

Fig. 9 zeigt hierzu einen Schnitt durch ein Statorweicheisenelement einer TFM mit insgesamt vier nebeneinanderliegenden Wicklungsstränge, die in vorliegender Zeichnung mit 1, 2, 3 und 4 bezeichnet sind.

Fig. 10 zeigt eine erste Ausführungsform der erfindungsgemäßen Schaltungsanordnung, bei der eine Phase einer Transversalflußmaschine 300 an einen Frequenzumrichter 302 zur Speisung dieser Phase der Transversalflußmaschine angeschaltet ist. Der Frequenzumrichter 302 ist über eine Speiseleitung 304 mit der Transversalflußmaschine 300 verbunden. Innerhalb der Transversalflußmaschine ist die Speiseleitung 304 an zwei parallel geschaltete Wicklungsstränge 306 und 308 angeschaltet, die eine Windungszahl $N_a$ aufweisen können. Durch die Unterteilung des Wicklungsquerschnittes in, wie im vorliegenden Fall, zwei parallel geschaltete Wicklungsstränge ist es möglich, die durch eine lokale Stromdichteerhöhung bedingten Verluste zu minimieren.

Bei der dargestellten Ausführungsform, ist die Zusatzinduktivität $L_z$ beispielsweise als Ringkern ausgeführt.

Nicht dargestellt ist eine mögliche Variante mit im Frequenzumrichter angeordneten Zusatzinduktivitäten.

Die beiden Wicklungsstränge werden nach Zusammenführung über die Leitung 310 an den Frequenzumrichter 302 angeschaltet.

Fig. 11 zeigt eine weitere Ausführungsform der erfindungsgemäßen Schaltungsanordnung, bei der anstelle von zusätzlichen Induktivitäten, ein Differenzflußwandler 312 Anwendung findet. Eine Phase einer Transversalflußmaschine 300 ist über eine Leitung 304 an den Frequenzumrichter 302 angeschaltet. Die Leitung 304 verzweigt sich zwei Speiseleitungen (314, 316) zu den parallel geschalteten Wicklungsstränge 306 und 308 mit einer Windungszahl $N_a$ auf. Die Spei- seleitungen (314, 316) durchlaufen gemeinsam den Differenzwandler 312. Über Leitung 310 ist der Ausgang der Transversalflußmaschine nach Zusammenführung der beiden Wicklungsstränge wiederum an den Frequenzumrichter 302 angeschaltet.

Mit der vorliegenden Erfindung ist es erstmals möglich, eine Transversalflußmaschine, bei der die Ringwicklungen in verschiedene Wicklungsstränge aufgeteilt sind, die parallel geschaltet werden, anzugeben, bei denen diese Wicklungsstränge alle eine gleichartige Stromverteilung aufweisen bzw. ein über dem Querschnitt der Ringwicklung gleichmäßiges Temperaturprofil. Bei den Ausführungsformen der Erfindung, die ein gleichmäßiges Temperaturprofil zum Gegenstand haben, wurde durch Beschaltung mit Zusatzinduktivitäten eine Stromverteilung in den parallel geschalteten Wicklungssträngen erreicht, die zu einer noch besseren Maschinenausnutzung führt. Des weiteren wurde mit der Schaltungsanordnung erstmals eine Speisung einer Transversalflußmaschine bekannt, bei der Sorge für eine gleichmäßige Auslastung der parallel geschalteten Wicklungsstränge einer Maschine getroffen worden war.

## Patentansprüche

1.  Transversalflußmaschine mit

    1.1 einer Vielzahl von äußeren Statorweicheisenelementen (1a) sowie einer Vielzahl von inneren Statorweicheisenelementen (1b).
    1.2 mindestens einer Wicklung (4, 5), die innen oder außen oder sowohl innen als auch außen verlaufen kann, wobei
    1.3 mindestens eine der Wicklungen (4, 5) eine Vielzahl von parallel geschalteten Wicklungssträngen (10, 12, 14, 16, 100, 120) umfaßt, die Transversalflußmaschine ist dadurch gekennzeichnet, daß
    1.4 die parallel geschalteten Stränge (10, 12, 14, 16, 100, 120) mit Zusatzinduktivitäten (30) beschaltet sind oder
    1.5 die parallel geschalteten Stränge durch einen Differenzflußwandler (40) geführt werden.

2.  Transversalflußmaschine nach Anspruch 1, dadurch gekennzeichnet, daß die Beschaltung mit Zusatzinduktivitäten oder die Führung durch den Differenzflußwandler so erfolgt, daß eine derartige Stromaufteilung in den einzelnen Strängen einer Wicklung vorliegt, daß die Wicklungsstränge, die aufgrund ihrer Anordnung in der Transversalflußmaschine stärker als andere Wicklungsstränge derselben Ringwicklung gekühlt sind, einen höheren Stromfluß aufweisen als diejenigen, die aufgrund ihrer Anordnung schwächer gekühlt sind, so daß eine gleichmäßige Temperaturverteilung in den einzelnen Strängen der Ringwicklung vorliegt.

3. Transversalflußmaschine nach einem der Ansprüche 1 - 2, dadurch gekennzeichnet, daß die Transversalflußmaschine eine Kühleinrichtung für Bereiche der Ringwicklung der Transversalflußmaschine umfasst.

4. Transversalflußmaschine nach Anspruch 3, dadurch gekennzeichnet, daß die Wicklungsstränge, die entfernt von der Kühleinrichtung verlaufen, derart mit Zusatzinduktivitäten beschaltet sind oder durch einen Differenzflußwandler geführt werden, daß diese einen geringeren Stromfluß aufweisen als die Wicklungsstränge, die in der Nähe der Kühleinrichtung angeordnet sind, so daß eine annähernd gleiche Temperaturverteilung in allen Wicklungssträngen der Transversalflußmaschine vorliegt.

5. Transversalflußmaschine nach Anspruch 1 - 2, dadurch gekennzeichnet, daß die Statorweicheisenelemente U-förmig mit einer Aussparung, die einen Nutgrund aufweist, zur Aufnahme der einzelnen Stränge der Ringwicklung ausgebildet sind.

6. Transversalflußmaschine nach Anspruch 4, dadurch gekennzeichnet, daß die Wicklungsstränge (120), die luftspaltseitig angeordnet sind, so mit Zusatzinduktivitäten beschaltet sind oder durch einen Differenzflußwandler geführt werden, daß diese einen geringeren Stromfluß aufweisen als die Wicklungsstränge (100), die am Nutgrund angeordnet sind, so daß eine annähernd gleiche Temperaturverteilung in allen Wicklungssträngen in der Transversalflußmaschine vorliegt.

7. Transversalflußmaschine nach Anspruch 1, dadurch gekennzeichnet, daß die Beschaltung mit Zusatzinduktivitäten derart erfolgt, daß in den parallel geschalteten Strängen eine gleiche Stromverteilung vorliegt.

8. Transversalflußmaschine nach Anspruch 1, dadurch gekennzeichnet, daß die parallel geschalteten Stränge derart durch den Differenzflußwandler geführt werden, daß in den parallel geschalteten Strängen eine gleiche Stromverteilung vorliegt.

9. Schaltungsanordnung zur Speisung einer Transversalflußmaschine mit parallel geschalteten Wicklungssträngen, dadurch gekennzeichnet, daß die Schaltungsanordnung Mittel zur Stromaufteilung in den parallel geschalteten Wicklungssträngen aufweist, um eine gleichmäßige Temperaturverteilung über den Querschnitt der parallel geschalteten Wicklungsstränge zu erreichen.

10. Schaltungsanordnung gemäß Aspruch 9, dadurch gekennzeichnet, daß die Mittel zur Stromaufteilung in parallel geschalteten Wicklungssträngen einer elektrischen Wechselstrommaschine Zusatzinduktivitäten ($L_z$) umfassen, mit denen die einzelnen Wicklungsstränge (306, 308) zur Kompensation der unterschiedlichen Temperaturaufteilung beschaltet sind.

11. Schaltungsanordnung nach Anspruch 10, dadurch gekennzeichnet, daß die Zusatzinduktivitäten als Ferritkern, als Schnitt- oder Ringbandkern mit Luftspalt ausgebildet sind.

12. Schaltungsanordnung nach einem der Ansprüche 10 oder 11, dadurch gekennzeichnet, daß die Zusatzinduktivitäten ($L_z$) innerhalb der elektrischen Wechselstrommaschine (300) angeordnet sind.

13. Schaltungsanordnung nach einem der Ansprüche 10 oder 11, dadurch gekennzeichnet, daß die Zusatzinduktivitäten ($L_z$) außerhalb der Maschine (300) angeordnet sind.

14. Schaltungsanordnung nach Anspruch 9, dadurch gekennzeichnet, daß die Zusatzinduktivitäten ($L_z$) in der Maschinenzuleitung (304) angeordnet sind.

15. Schaltungsanordnung nach Anspruch 9, dadurch gekennzeichnet, daß die Zusatzinduktivitäten ($L_z$) innerhalb des Frequenzumrichters (302) angeordnet sind.

16. Schaltungsanordnung gemäß Anspruch 9, dadurch gekennzeichent, daß die Mittel zur Stromaufteilung einen Differenzflußwandler (312) umfassen.

Fig. 1

Fig. 2

Fig. 3

FIG.4

FIG.5

FIG.6

Fig. 7

EP 0 833 429 A1

FIG. 8

FIG. 8A

13

FIG.9

FIG. 10

FIG. 11

**Europäisches Patentamt**

## EUROPÄISCHER RECHERCHENBERICHT

Nummer der Anmeldung

EP 97 11 6207

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | PATENT ABSTRACTS OF JAPAN vol. 8, no. 53 (E-231), 9.März 1984 & JP 58 204749 A (HITACHI SEISAKUSHO KK), 29.November 1983, * Zusammenfassung * | 1,9,16 | H02K21/12 H02K11/00 |
| A | DE 39 27 454 A (PROF.DR.-ING. H.WEH) * Ansprüche 1-3 * | 1,9 | |
| A | DE 43 35 848 A (J.M.VOITH GMBH) 27.April 1995 * Zusammenfassung; Abbildungen 1,2 * | 1,9 | |
| A | PATENT ABSTRACTS OF JAPAN vol. 7, no. 84 (E-169), 7.April 1983 & JP 58 012550 A (TOKYO SHIBAURA DENKI KK), 24.Januar 1983, * Zusammenfassung * | 1,9 | |
| A | EP 0 266 598 A (ROBERT BOSCH GMBH) 11.Mai 1988 * Zusammenfassung; Abbildungen 1,2 * | | RECHERCHIERTE SACHGEBIETE (Int.Cl.6) H02K |

Der vorliegende Recherchenbericht wurde für alle Patentansprüche erstellt

| Recherchenort | Abschlußdatum der Recherche | Prüfer |
|---|---|---|
| BERLIN | 12.Januar 1998 | Leouffre, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)